(19) Europäisches Patentamt
European Patent Office
Office européen des brevets

(11) Numéro de publication: **0 106 872 B1**

# (12) FASCICULE DE BREVET EUROPEEN

(45) Date de publication du fascicule du brevet: **27.12.85**

(51) Int. Cl.⁴: **C 01 G 43/01**

(21) Numéro de dépôt: **83901377.8**

(22) Date de dépôt: **29.04.83**

(86) Numéro de dépôt international: **PCT/FR 83/00083**

(87) Numéro de publication internationale: **WO 83/03820 (10.11.83** Gazette **83/26)**

(54) **PROCEDE D'OBTENTION DE UO3 DE GRANDE SURFACE SPECIFIQUE A PARTIR DE NITRATE D'URANYLE HYDRATE.**

(30) Priorité: **30.04.82 FR 8207923**

(43) Date de publication de la demande: **02.05.84 Bulletin 84/18**

(45) Mention de la délivrance du brevet: **27.12.85 Bulletin 85/52**

(84) Etats contractants désignés: **BE DE GB**

(56) Documents cités:
**FR - A - 2 088 170**
**FR - A - 2 370 695**
**GB - A - 1 054 783**

**Chemical Abstracts, vol. 50, no. 22, 25 November 1956, Columbus, Ohio, (US), J.R. Bridge et al.: "Thermal decomposition of uranyl nitrate hexahydrate", abrégé 16498i and 16499a, U.S. Atomic Energy Comm. BMI-1110, 10 pp. (1956)**

(73) Titulaire: **COMURHEX Société pour la Conversion de l'Uranium en Métal et Hexafluorure, Tour Manhattan La Défense 2 6, place de l'Iris, F-92400 Courbevoie (FR)**

(72) Inventeur: **BACHELARD, Roland, 99, Grande rue de la Guillotière, F-69007 Lyon (FR)**
Inventeur: **LAKODEY, Pierre, 5, Impasse Berthelot, F-69800 Saint-Priest (FR)**

(74) Mandataire: **Gaucherand, Michel et al, PECHINEY UGINE KUHLMANN 28 rue de Bonnel, F-69433 Lyon Cedex 3 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 106 872 B1

BUNDESDRUCKEREI BERLIN

## Description

L'invention concerne un procédé d'obtention de trioxyde d'uranium de grande surface spécifique par dénitration thermique en deux étapes de nitrates d'uranyle hydratés, de formule $UO_2(NO_3)_2, xH_2O$, avec $2 \leq x \leq 6$.

Il est bien connu que la production du trioxyde d'uranium ($UO_3$) par dénitration thermique du nitrate d'uranyle hexahydraté selon la réaction:

$$UO_2(NO_3)_2, 6\,H_2O \rightarrow UO_3 + 2\,NO_2 + O_2 + 6\,H_2O$$

est une étape importante dans les procédés de production de l'hexafluorure d'uranium comportant la réduction du trioxyde d'uranium en dioxyde d'uranium, la fluoruration du dioxyde d'uranium par l'acide fluorhydrique et, enfin, par l'action du fluor sur le tétrafluorure d'uranium conduisant à l'hexafluorure d'uranium souhaité. Mais, il est également bien connu que l'$UO_2$ obtenu par dénitration thermique puis réduction, offre une faible productivité par manque de réactivité à l'égard de l'acide fluorhydrique, lors de sa transformation en $UF_4$.

De nombreux procédés d'obtention du trioxyde d'uranium ont déjà été décrits dans la littérature spécialisée. C'est ainsi que le document »URANIUM PRODUCTION TECHNOLOGY« édité par Charles D. Harrington and Archie E. Ruehle, New York, Edition 1959, pages 181 à 191, cite plusieurs procédés de dénitration thermique du nitrate d'uranyle hexahydraté.

Un premier procédé, de type discontinu, consiste à traiter thermiquement une solution de nitrate d'uranyle hexahydraté concentrée et maintenue sous agitation, d'abord à une température contrôlée de 621°C des gaz de combustion pendant une heure et demi, puis à une température de 510°C de ces gaz pendant cinq heures et, enfin, à refroidir le produit pulvérulent obtenu pendant une demi-heure environ.

Toutefois, comme l'auteur l'exprime lui-même, ce procédé présente certains inconvénients qui en limite son développement. En effet, le produit pulvérulent obtenu est, en fait, constitué par un mélange de $UO_3$ et de $U_3O_8$, ce deuxième oxyde se formant sur les parois du réacteur portées à une température plus élevée que celle qui règne à l'intérieur dudit réacteur. De plus, si la température de dénitration est trop forte, elle peut conduire à la prise en masse du mélange d'oxydes précités, tandis que, si la température de dénitration est trop faible, le mélange d'oxydes contient encore du nitrate d'uranyle et de l'eau. Enfin, dans le cas le plus favorable, c'est-à-dire dans le cas où le produit pulvérulent obtenu est de l'$UO_3$, ultérieurement réduit en $UO_2$, ce dernier offre une faible capacité à se combiner avec HF lors de l'étape de fluoruration dudit oxyde. Cette faible capacité de l'$UO_2$ à réagir avec HF, qui mesure en fait le manque de réactivité du produit, est considérée par l'auteur lui-même comme la conséquence de la faible surface spécifique du trioxyde d'uranium obtenu ($0{,}73\ m^2/g$).

Pour améliorer cette réactivité du dioxyde d'uranium, l'auteur préconise d'utiliser certains artifices tels que, par exemple, l'introduction d'acide sulfurique dans la solution de nitrate d'uranyle soumise à la dénitration thermique. Mais, ces artifices se révèlent d'une efficacité limitée puisque l'$UO_3$ produit présente une surface spécifique ne dépassant pas $2\ m^2 \cdot g^{-1}$.

Un autre procédé, de type continu, consiste à décomposer thermiquement le nitrate d'uranyle hexyhydraté par introduction d'une solution aqueuse le contenant dans un lit de trioxyde d'uranium pulvérulent maintenu à la température de dénitration et soumis à agitation. La décomposition thermique du nitrate d'uranyle en solution s'effectue dans un réacteur à auge, dont le fond est chauffé électriquement par contact direct entre la solution de nitrate d'uranyle et l'$UO_3$ pulvérulent chaud remplissant l'auge dudit réacteur, la température du milieu de dénitration étant maintenue entre 510°C et 538°C. Pour permettre le maintien sous agitation du lit de pulvérulent, le réacteur de dénitration est muni d'un agitateur à axe horizontal dont les bras, en forme de T, entretiennent le brassage dudit lit. Au fur et à mesure de sa formation, l'$UO_3$ est extrait du réacteur, tandis que les effluents gazeux sont captés et traités.

Bien que ce procédé offre l'avantage d'être de type continu, il présente des inconvénients similaires à ceux évoqués dans le cas du procédé discontinu précité de dénitration du nitrate d'uranyle hexahydraté. En effet, le produit pulvérulent obtenu peut être un mélange de $UO_3$ et $U_3O_8$ car ce deuxième oxyde peut se former sur les parois surchauffées du réacteur. De plus, si la température de dénitration n'est pas correctement maîtrisée, elle peut provoquer la prise en masse du mélange d'oxydes d'uranium si elle est trop élevée, ou encore, donner un mélange d'oxydes d'uranium contenant encore du nitrate d'uranyle et de l'eau, si elle est trop faible. Enfin, après que le produit pulvérulent obtenu selon ce procédé ait été réduit en dioxyde d'uranium, ce dernier offre une très faible réactivité à l'égard de l'acide fluorhydrique dans l'étape de fluoruration ultérieure, comme a pu le constater l'homme de l'art, faible réactivité liée à la faible surface spécifique B.E.T. de l'$UO^3$ produit par ledit procédé (inférieure à $1\ m^2 \cdot g^{-1}$).

Il est également connu d'effectuer la dénitration thermique du nitrate d'uranyle héxadryté en lit fluidisé. Un tel procédé est décrit dans la publication »The Thermal denitration of uranyl nitrate in a fluidised bed reactor« de l'AUSTRALIAN ATOMIC ENERGY COMMISSION — Juillet 1974 (ISBN 0-642-99645-8), pages 1 à 18. Ce procédé consiste à pulvériser une solution concentrée de nitrate

d'uranyle dans un lit fluidisé (au moyen d'air ou de vapeur d'eau) de trioxyde d'uranium maintenu approximativement à la température de 270° C. L'$UO_3$ produit par la dénitration thermique se développe sur les particules granuleuses d'$UO_3$ initialement présentes dans le lit fluidisé, ou encore forme de nouvelles particules granuleuses, mises à leur tour en état de fluidisation. Mais, le trioxyde d'uranium produit selon ce procédé, puis soumis à une réduction, conduit à un dioxyde d'uranium qui manifeste une faible réactivité lors de l'étape ultérieure de fluoruration. Cette faible réactivité apparaît être, encore une fois, la conséquence de la faible réactivité apparaît être, encore une fois, la conséquence de la faible surface spécifique B.E.T. de l'$UO_3$ produit lors de la dénitration thermique, cette surface restant inférieure au $m^2 \cdot g^{-1}$.

Dès lors, pour augmenter la réactivité de l'$UO_3$ produit par la dénitration thermique du nitrate d'uranyle en lit fluidisé, les auteurs du procédé préconisent également l'introduction d'ions sulfates dans la solution de nitrate d'uranyle à traiter, comme la littérature spécialisée l'avait déjà recommandé, mais les résultats énoncés montrent que, dans ce cas, la surface spécifique B.E.T. de l'$UO_3$ produit ne peut dépasser 1,5 $m^2 \cdot g^{-1}$.

De plus, les procédés actuellement connus peuvent conduire à la production d'un mélange d'$UO_3$ et $U_3O_8$ qui, lors de l'étape de fluoruration, donne à son tour un mélange de $UF_4$ et $UO_2F_2$, dont il faut éliminer l'$UO_2F_2$ qui est une impureté gênante.

Face à ces difficultés, le titulaire de la présente demande a alors cherché à trouver une nouvelle solution, ce qui l'a amené dans la demande FR-A-2 370 695 à enseigner un procédé de dénitration en deux étapes:

— une première étape consistant à déshydrater partiellement le nitrate liquide dans un four à court temps de séjour (atomiseur) et dans des conditions de température telles que le solide formé sortait de l'atomiseur à 110° C.
— une deuxième étape au cours de laquelle ledit solide était calciné dans un four à une température comprise entre 200 et 600° C.

Ce procédé a permis d'obtenir un oxyde de surface spécifique voisine de 10 $m^2 \cdot g^{-1}$, surface suffisante à l'époque pour répondre aux besoins des utilisateurs.

Mais ces derniers, toujours plus exigeants, ont depuis considéré que cet $UO_3$ conduisait par réduction à un dioxyde de réactivité encore médiocre lors de l'étape ultérieure de fluoruration, ce qui exigeait des installations industrielles de grande capacité très coûteuses en raison de la faible cinétique de réaction et du médiocre rendement en découlant.

C'est pourquoi, la demanderesse, poursuivant ses recherches, a trouvé et mis au point un procédé de production du seul trioxyde d'uranium à surface spécifique B.E.T. nettement supérieure à 10 $m^2 \cdot g^{-1}$ par dénitration thermique en deux étapes conduisant après réduction à un dioxyde d'uranium disposant d'une forte réactivité à l'égard de l'agent de fluoruration, avec lequel il se combine à vitesse élevée et avec un rendement maximal.

Le procédé selon l'invention d'obtention du trioxyde d'uranium de grande surface spécifique par dénitration thermique de nitrate d'uranyle hydraté de formule $UO_2\ (NO_3)_2,\ x\ H_{2}0$ dans laquelle x est compris dans l'intervalle $2 \leq x \leq 6$, se caractérise en ce que, dans la première étape, le nitrate d'uranyle hydraté est traité sous une forme liquide à une température comprise entre 160° C et 260° C jusqu'à l'obtention d'une phase solide contenant au moins 55% en poids d'uranium et, dans une deuxième étape, ladite phase solide est progressivement portée à une température au plus égale à 600° C selon une vitesse de montée en température d'au plus 1000° C l'heure, et est maintenue à cette température d'au plus 600° C jusqu'à l'obtention d'une deuxième phase solide formée d'$UO_3$ à surface spécifique élevée.

Le nitrate d'uranyle hydraté selon le procédé de l'invention, se présente sous une forme liquide obtenue, soit par dissolution dudit nitrate dans de l'eau, la concentration de la solution obtenue n'étant pas critique, soit par fusion dudit nitrate dans son eau de cristallisation.

Selon le procédé de l'invention, la première étape de dénitration thermique se déroule généralement sous une pression réduite pour faciliter l'élimination rapide de l'eau présente avant que ne s'amorce la décomposition du nitrate d'uranyle, mais elle peut également s'effectuer à la pression atmosphérique: en pratique, la première étape de dénitration s'effectue sous une pression au plus égale à la pression atmosphérique.

Quand la première étape se déroule sous pression réduite, celle-ci est préférentiellement choisie dans l'intervalle de 5 à 200 millibar, tandis que la température à laquelle est porté le nitrate d'uranyle sous forme liquide est préférentiellement choisie entre 180° C et 240° C.

Quand la première étape se déroule sous la pression atmosphérique, la température à laquelle est porté le nitrate d'uranyle sous forme liquide est préférentiellement choisie entre 220° C et 260° C.

La durée du traitement de la première étape est choisie d'une manière telle qu'elle conduise à l'obtention d'une phase solide contenant au moins 55% d'uranium.

La phase solide obtenue lors de la première étape est ensuite soumise à la deuxième étape du procédé selon l'invention qui se déroule sous une pression au plus égale à la pression atmosphérique, tandis que la température du milieu est progressivement portée à la température au plus égale de

600°C.

Selon le procédé de l'invention, il est nécessaire que la vitesse de montée en température de la deuxième étape du procédé ne soit pas supérieure à 1000°C à l'heure, mais il est souhaitable de choisir cette vitesse de montée en température dans l'intervalle 100°C à l'heure à 500°C à l'heure.

Comme celà a déjà été exprimé, la température la plus haute sous laquelle se déroule la deuxième étape du procédé est au plus égale à 600°C, mais elle peut être préférentiellement choisie dans l'intervalle de 300°C à 500°C.

Dès lors que la phase solide résultant de la première étape a été progressivement portée au niveau de la température choisie, par l'intermédiaire d'une vitesse de montée en température adéquate, le milieu réactionnel de la deuxième étape est maintenu sous une pression au plus égale à la pression atmosphérique.

La deuxième étape du procédé de dénitration thermique selon l'invention s'achève par le maintien de la phase solide ainsi traitée à la température choisie d'au plus 600°C pendant un temps au plus égal à 6 heures.

La phase solide recueillie après le déroulement de la deuxième étape du procédé selon l'invention, qui se présente sous un aspect pulvérulent, est exclusivement constituée par de l'$UO_3$, offrant dans la très grande majorité des cas une surface spécifique B.E.T. au moins égale à 10 $m^2$ par gramme, qui a été déterminée au moyen de la méthode décrite par S. Brunauer, P. H. Emmet et E. Teller dans la publication »Adsorption of gases in multimolecular layers« (J. Am. CHEM. SOC. 60, 309—1938) et mise en oeuvre selon la procédure décrite dans la norme AFNOR—NF—X 11-621-75-11.

Après réduction de l'$UO_3$ en $UO_2$, par exemple par de l'hydrogène, l'oxyde ainsi réduit possède une très forte réactivité à l'égard de l'acide fluorhydrique utilisé dans l'étape ultérieure de fluoruration. En pratique, le procédé selon l'invention peut être conduit d'une manière continue ou discontinue.

La première étape du procédé est réalisée dans des réacteurs de type connu tels évaporateur atmosphérique ou sous vide, écailleuse, tandis que la deuxième étape du procédé l'est dans des réacteurs de type connu tels que four rotatif, four à lit fluidisé à plusieurs étages, four à lit coulant, four vertical à plateaux. Mais, il est également possible de mettre en oeuvre les deux étapes du procédé selon l'invention dans des réacteurs de type connu, comportant au moins deux zones de traitement.

Que le procédé de l'invention soit pratiqué d'une manière continue ou discontinue, les effluents gazeux sont évacués au fur et à mesure de leur formation, puis sont traités par les procédés connus tels que par exemple selon le procédé décrit dans FR-A-2 370 695 qui consiste à réduire catalytiquement les oxydes d'azote produits en azote et vapeur d'eau, le dégagement de chaleur fourni étant utilisé pour la transformation du nitrate d'uranyle en trioxyde d'uranium.

L'invention sera mieux comprise grâce à l'illustration qui en est faite au moyen des exemples.

## Exemple 1

Cet exemple illustre simultanément dans la première étape du procédé selon l'invention, l'influence de la pression règnant dans la zone de traitement et celle du temps de séjour dans ladite zone à la température choisie.

Pour ce faire, on a introduit 27 grammes d'une solution aqueuse de nitrate d'uranyle à environ 78% poids de concentration [exprimé en $UO^2(NO^3)^2$] dans un pilote de laboratoire constitué par un réacteur torunant d'une capacité de 1 litre placé dans un bain thermostaté maintenu à 230°C. Les effluents gazeux provenant du réacteur étaient piégés dans un condenseur.

Trois essais ont été réalisés successivement dans ce pilote de laboratoire:

L'essai n° 1 a été réalisé à pression atmosphérique, à la température de 230°C pendant un temps de 75 minutes.

L'essai n° 2 a été réalisé sous une pression réduite de 30 millibar, à la température de 230°C pendant un temps de 60 minutes.

L'essai n° 3 à été réalisé sous une pression réduite de 30 millibar, à la température de 230°C pendant un temps de 30 minutes.

Pour ces trois essais, la phase solide résultant de la première étape était soumise à la deuxième étape du procédé selon l'invention, qui s'effectuait selon les conditions suivantes: la phase solide, issue de la première étape, était disposée dans une nacelle, selon une couche d'environ 8 millimètres d'épaisseur, soumise à un balayage d'air. Puis, la phase solide était portée, selon une vitesse de montée de la température de 250°C à l'heure, à la température de 500°C et maintenue à cette température pendant 30 minutes.

La phase solide obtenue après cette deuxième étape, qui était constituée par de l'$UO_3$ pulvérulent de couleur rouge brique foncée, était soumise à la détermination de la surface spécifique B.E.T.

Les caractéristiques du procédé selon l'invention et du produit résultant ont été consignées dans le tableau I ci-après:

Tableau I

| | Essais 1 | 2 | 3 |
|---|---|---|---|
| 1ère étape | | | |
| Pression appliquée en-bar | 1 | 0,030 | 0,030 |
| Température du bain en °C | 230 | 230 | 230 |
| Durée du traitement en minute | 75 | 60 | 30 |
| Teneur en U de la phase solide en % en poids | 60,5 | 63,19 | 62,17 |
| 2ème étape | | | |
| Vitesse montée en température en $°C \cdot h^{-1}$ | 250 | 250 | 250 |
| Température maximale en °C | 500 | 500 | 500 |
| Durée en minute du maintien à la température maximale | 30 | 30 | 30 |
| $UO_3$ produit: Surface spécifique B.E.T. en $m^6 \cdot g^{-1}$ | 18,3 | 19,3 | 16,9 |

Ainsi, on peut constater, à travers les résultats consignés dans le tableau I que, en appliquant des conditions opératoires très diverses, mais choisies dans les domaines définis selon le procédé de l'invention, on obtient, à l'issue de la première étape, une phase solide ayant une teneur pondérale en uranium toujours supérieure à 55% conduisant, à l'issue de la deuxième étape, à un trioxyde d'uranium, disposant d'une surface spécifique B.E.T. qui est supérieure à celle des produits obtenus selon les procédés de l'art antérieur.

Exemple 2

Cet exemple illustre, dans la première étape du procédé selon l'invention, l'influence de la température établie dans la zone de traitement.

Deux essais ont été réalisés successivement: dans le pilote de laboratoire déjà décrit dans l'exemple 1, en y traitant, pour chaque essai, 27 g de la solution aqueuse de nitrate d'uranyle à environ 78% en poids de $UO_2(NO_3)_2$.

L'essai n° 4 a été réalisé sous une pression réduite de 30 millibar, à une température de 190° C maintenue pendant deux heures et 45 minutes.

L'essai n° 5 a été réalisé sous une pression réduite de 30 millibar, à une température de 220° C maintenue pendant deux heures.

Pour ces deux essais, la phase solide résultant de la première étape était soumise à la deuxième étape du procédé selon l'invention qui s'effectuait selon les conditions suivantes: la phase solide, issue de la première étape, était disposée dans une nacelle, selon une couche l'environ 8 millimètres d'épaisseur soumise à un balayage d'air. Puis, la phase solide était portée, selon une vitesse de 250° C à d'heure, à la température de 500° C et mainktenue à cette température pendant 30 minutes.

La phase solide, obtenue à l'issue de cette deuxiàme étape, était consituée de $UO_3$ pulvérulent de couleur rouge brique foncée et était soumise à la détermination de la surface spécifique B.E.T.

Les caractéristiques du procédé selon l'invention et du produit résultant ont été rassemblées dans le tableau II suivant:

Tableau II

| | Essais 4 | 5 |
|---|---|---|
| 1ère étape | | |
| Pression appliquée en bar | 0,030 | 0,030 |
| Température du bain en °C | 190 | 220 |
| Durée du traitement en minute | 165 | 120 |
| Teneur en U de la phase solide en % poids | 61,5 | 64,0 |
| 2ème étape | | |
| Vitesse montée en température en $°C \cdot h^{-1}$ | 250 | 250 |
| Température maximale en °C | 500 | 500 |
| Durée en minute du maintien à la température maximale | 30 | 30 |
| $UO_3$ produit: Surface spécifique B.E.T. en $m^2 \cdot g^{-1}$ | 23,8 | 23,5 |

On peut alors constater que, en faisant varier la température établie dans la zone de traitement de la première étape, dans les limites préconisées par le procédé selon l'invention, on obtenait à l'issue de la première étape, une phase solide ayant une teneur pondérale en uranium toujours supérieure à 55%, conduisant, à l'issue de la deuxième étape, à un trioxyde d'uranium ayant une surface spécifique B.E.T. supérieure à celle de l'$UO_3$ produit selon l'art antérieur.

## Exemple 3

Cet exemple illustre, dans la deuxième étape du procédé selon l'invention, l'influence de la vitesse de la montée en température. Trois essais ont été réalisés successivement dans le pilote de laboratoire déjà décrit dans l'exemple 1, en y traitant pour chaque essai 27 g d'une solution aqueuse de nitrate d'uranyle à environ 78% de $UO_2(NO_3)_2$.

La première étape de chacun des trois essais a été réalisée sous une pression réduite de 30 millibar, à la température de 200° C qui a été maintenue à ce niveau pendant 2 heures.

La phase solide recueillie à l'issue de la première étape avait une teneur en % en poids d'uranium de 60,5%.

Cette phase solide subissait ensuite la deuxième étape du procédé selon l'invention, chaque essai faisant l'objet de conditions différentes de vitesse de la montée en température pour la deuxième étape.

L'essai 6 a été réalisé en portant la phase solide provenant de la première étape à la température de 500° C selon une vitesse de montée de la température de 100° C à l'heure. Puis, la phase solide amenée à la température de 500° C y était maintenue pendant 2 heures.

L'essai 7 a été réalisé en portant la phase solide provenant de la première étape à la température de 500° C selon une vitesse de montée de la température de 250° C à l'heure. Puis, la phase solide amenée à cette température de 500° C y était maintenue pendant 30 minutes.

L'essai 8 a été réalisé en portant la phase solide provenant de la première étape à la température de 500° C selon une vitesse de montée de la température de 1000° C. Puis la phase solide amenée à cette température de 500° C y était maintenue pendant 2 heures.

La phase solide obtenue à l'issue de cette deuxième étape était constituée pour les essais 6 et 7 de $UO_3$ pulvérulent de couleur rouge brique foncée et, pour l'essai 8, de $UO_3$ pris en masse. L'$UO_3$ ainsi produit pour chacun des essais était soumis à la détermination de la surface spécifique B.E.T.

Les caractéristiques du procédé selon l'invention et du produit résultant ont été rassemblées dans le tableau III suivant:

Tableau III

| | Essais 6 | 7 | 8 |
|---|---|---|---|
| 1ère étape | | | |
| Pression appliquée en bar | 0,030 | 0,030 | 0,030 |
| Température du bain en °C | 200 | 200 | 200 |
| Durée du traitement en minute | 120 | 120 | 120 |
| Teneur en U de la phase solide en % poids | 60,5 | 60,5 | 60,5 |
| 2ème étape | | | |
| Vitesse montée en température en °C · $h^{-1}$ | 100 | 250 | 1000 |
| Température maximale en °C | 500 | 500 | 500 |
| Durée en minute du maintien à la température maximale | 120 | 30 | 120 |
| $UO_3$ produit: Surface spécifique B.E.T. en $m^2 \cdot g^{-1}$ | 21,9 | 17,5 | 5,6 |

Ainsi, le tableau III permet de constater qu'en faisant varier la vitesse de montée de la température dans la deuxième étape, dans les limites définies pour le procédé de l'invention, on obtenait, à l'issue de cette deuxième étape, un trioxyde d'uranium degrande surface spécifique quand ladite vitesse était choisie dans le domaine préférentiel (100°C · $h^{-1}$ à 500°C · $h^{-1}$), alors que l'on obtenait un trioxyde d'uranium dont la surface spécifique B.E.T. n'était plus que de 5,6 $m_2 \cdot g^{-1}$ quand ladite vitesse était choisie à la limite supérieure du domaine préconisé (100°C · $h^{-1}$).

Exemple 4

Cet exemple illustre l'enchaînement des deux étapes du procédé selon l'invention, en utilisant pour la première étape, le même réacteur que dans l'exemple 1 et, pour la deuxième étape, un réacteur à litfixe d'un diamètre interne de 27 millimètres comportant un diffuseur poreux permettant le passage d'un gaz, le produit solide à traiter étant placé sur le diffuseur, tandis que le chauffage du réacteur tubulaire est assuré par un manchon électrique.

Pour ce faire, on a réalisé la première étape du procédé en introduisant 30 g d'une solution aqueuse de nitrate d'uranyle à environ 78% en poids dans le réacteur rotatif, dont la pression était maintenue à 30 millibar et la température à 190°C. Au bout de 165 minutes à ladite température, on obtenait une phase solide pulvérulente ayant un pour cent en poids d'uranium de 61,5%.

La phase solide résultant de la première étape était alors placeé dans le réacteur à lit fixe précité à raison de 17,2 g seulement de ladite phase, pour des raisons pratiques d'analyse chimique de ladite phase, pour y subir la deuxième étape du procédé.

Le débit d'air traversant le diffuseur était de 70 litres à l'heure. La vitesse de montée de la température était de 190°C à l'heure. La température maximale à laquelle était portée ladite phase solide était de 500°C, niveau auquel elle était maintenue pendant 30 minutes.

On a alors recueilli à la sortie de ce deuxième réacteur 12,3 g d'un produit pulvérulent rouge brique foncé qui, après analyse, s'est révalé être exclusivement de l'$UO_3$ dont la surface spécifique B.E.T. était de 26,7 $m^2 \cdot g^{-1}$.

Exemple 5

Cet exemple illustre le procédé de l'art antérieur tel qu'il a été décrit dans »URANIUM PRODUCTION TECHNOLOGY« de Charles D. Harrington et Archie E. Ruehle, édition 1959.

Pour celà, on a placé dans l'auge d'un réacteur similaire à celui décrit dans l'art antérieur, 100 parties de $UO_3$ produit selon le procédé de l'invention disposant d'une surface spécifique B.E.T. de

$12{,}9\ m^2 \cdot g^{-1}$ dans le but de disposer d'un support de dénitration.

Le support, ainsi placé dans l'auge, était soumis à une agitation au moyen d'un agitateur à axe horizontal.

Puis, on a introduit dans ledit réacteur 100 parties de $UO_3$ sous forme de $UO_2(NO_3)_2$, 6 $H_2O$ — et l'on a porté la température du support à 513° C et l'y maintenait pendant 1 heure.

On a alors obtenu de l'$UO_3$ par transformation de la charge de nitrate d'uranyle hexahydraté, qui disposait d'une surface spécifique B.E.T. de $7{,}9\ m^2 \cdot g^{-1}$, représentant une perte de 38% environ de la surface spécifique B.E.T. initiale.

On a introduit à nouveau 100 parties d'$UO_3$ sous forme de l'hexahydrate et l'on a porté la température du support à 513° C et l'y maintenait pendant 1 heure.

On a alors obtenu de l'$UO_3$ par transformation de la charge de nitrate d'uranyle hexahydraté dont la surface spécifique B.E.T. n'était plus que de $2{,}2\ m^2 \cdot g^{-1}$, représentant une perte de 83% environ de ladite surface initiale.

L'introduction du nitrate d'uranyle hexahydraté a été interrompue après cette deuxième introduction car la chute de la surface spécifique B.E.T. était telle qu'elle étair pratiquement au niveau des faibles valeurs des surfaces spécifiques B.E.T. décrites dans l'art antérieur.

## Revendications

1. Procédé d'obtention de trioxyde d'uranium de grande surface spécifique par dénitration thermique du nitrate d'uranyle hydraté de formule $UO_2\ (NO_3)_2$, x $H_2O$, où $2<x<6$, en deux étapes au cours desquelles ledit nitrate est d'abord traité sous une forme liquide jusqu'à l'obtention d'une phase solide, celle-ci étant ensuite portée jusqu'à une température au plus égale à 600° C et jusqu'à l'obtention d'une phase solide formée d'$UO_3$, caractérisé en ce que, dans la première étape, ledit nitrate est traité à une température comprise entre 160° C et 260° C jusqu'à l'obtention d'une phase solide contenant au moins 55% en poids d'uranium et, dans la deuxième étape, ladite phase solide est progressivement portée à une température au plus égale à 600° C, selon une vitesse de montée de la température d'au plus 1000° C à l'heure, et est maintenue à cette température d'au plus 600° C jusqu'à l'obtention d'une deuxième phase solide formée d'$UO_3$ à surface spécifique élevée.

2. Procédé d'obtention de trioxyde d'uranium de grande surface spécifique selon la revendication 1, caractérisé en ce que la première étape de dénitration s'effectue sous une pression au plus égale à la pression atmosphérique.

3. Procédé d'obtention de trioxyde d'uranium de grande surface spécifique selon les revendications 1et 2, caractérisé en ce que la première étape de dénitration s'effectue sous une pression réduite choisie dans l'intervalle 5 à 200 millibar.

4. Procédé d'obtention de trioxyde d'uranium de grande surface spécifique selon l'une quelconque des revendications 1 et 2, caractérisé en ce que la température à laquelle s'effectue la première étape est comprise entre 220° C et 260° C quand elle se déroule à pression atmosphérique.

5. Procédé d'obtention de trioxyde d'uranium de grande surface spécifique selon l'une des revendications 1 à 3, caractérisé en ce que la température à laquelle s'effectue la première étape est comprise entre 180° C et 240° C quand elle se déroule sous pression réduite.

6. Procédé d'obtention de trioxyde d'uranium de grande surface spécifique selon l'une quelconque des revendications 1 à 5, caractérisé en ce que la vitesse de montée de la température de la deuxième étape est choisie dans l'intervalle 100° C à l'heure à 500° C à l'heure.

7. Procédé d'obtention de trioxyde d'uranium de grande surface spécifique selon l'une quelconque des revendications 1 à 6, caractérisé en ce que la température la plus haute sous laquelle se déroule la deuxième étape est choisie dans l'intervalle 300° C à 500° C.

8. Procédé d'obtention de trioxyde d'uranium de grande surface spécifique selon l'une quelconque des revendications 1 à 7, caractérisé en ce que la température la plus haute sous laquelle se déroule la deuxième étape est maintenue à ce niveau pendant un temps au plus égal à 6 heures.

## Patentansprüche

1. Verfahren zur Gewinnung von Urantrioxid großer spezifischer Oberfläche durch thermische Entnitrierung des Uranylnitrat-Hydrats der Formel $UO_2(NO_3)_2$, x $H_2O$, wobei $2<x<6$, in zwei Stufen, in deren Verlauf dieses Nitrat zunächst in einer flüssigen Form bis zum Erhalten einer festen Phase behandelt wird, welche anschließend bis auf eine Temperatur von höchstens 600°C und bis zum Erhalten einer aus $UO_3$ gebildeten festen Phase gebracht wird, dadurch gekennzeichnet, daß dieses Nitrat in der ersten Stufe bei einer Temperatur im Bereich von 160° C bis 260° C bis zum Erhalten einer wenigstens 55 Gew.-% Uran enthaltenden festen Phase behandelt wird und diese feste Phase in der zweiten Stufe fortschreitend entsprechend einer Anstiegsgeschwindigkeit der Temperatur von höchstens 1000°C/h auf eine Temperatur von höchstens 600°C gebracht und bei dieser Temperatur von höchstens 600° C bis zur Gewinnung einer zweiten, aus $UO_3$ erhöhter spezifischer Oberfläche gebilde-

ten festen Phase gehalten wird.

2. Verfahren zur Gewinnung von Urantrioxid großer spezifischer Oberfläche nach Anspruch 1, dadurch gekennzeichnet, daß die erste Entnitrierungsstufe bei einem dem atmosphärischen Druck höchstens gleichen Druck abläuft.

3. Verfahren zur Gewinnung von Urantrioxid großer spezifischer Oberfläche nach den Ansprüchen 1 und 2, dadurch gekennzeichnet, daß die erste Entnitrierungsstufe bei einem verringerten, im Bereich von 5 bis 200 mbar gewählten Druck abläuft.

4. Verfahren zur Gewinnung von Urantrioxid großer spezifischer Oberfläche nach irgendeinem der Ansprüche 1 und 2, dadurch gekennzeichnet, daß die Temperatur, bei der die erste Stufe abläuft, im Bereich von 220° C bis 260° C ist, wenn sie bei atmosphärischem Druck erfolgt.

5. Verfahren zur Gewinnung von Urantrioxid großer spezifischer Oberfläche nach einem der Ansprüche 1 bis 3, dadurch gekennzeichnet, daß die Temperatur, bei der die erste Stufe abläuft, im Bereich von 180° C bis 240° C ist, wenn sie bei verringertem Druck erfolgt.

6. Verfahren zur Gewinnung von Urantrioxid großer spezifischer Oberfläche nach irgendeinem der Ansprüche 1 bis 5, dadurch gekennzeichnet, daß die Anstiegsgeschwindigkeit der Temperatur der zweiten Stufe im Bereich von 100° C/h bis 500° C/h gewählt wird.

7. Verfahren zur Gewinnung von Urantrioxid großer spezifischer Oberfläche nach irgendeinem der Ansprüche 1 bis 6, dadurch gekennzeichnet, daß die höchste Temperatur, bei der die zweite Stufe abläuft, im Bereich von 300° C bis 500° C gewählt wird.

8. Verfahren zur Gewinnung von Urantrioxid großer spezifischer Oberfläche nach irgendeinem der Ansprüche 1 bis 7, dadurch gekennzeichnet, daß die höchste Temperatur, bei der die zweite Stufe abläuft, auf diesem Niveau während einer Zeit von höchstens 6 Stunden gehalten wird.

**Claims**

1. A process for the production of uranium trioxide having a large specific surface by the thermal denitration of uranylnitrate hexahydrate corresponding to the formula $UO_2(NO_3)_2 \cdot x H_2O$, in which $2 \leq x \leq 6$, in two stages in which said nitrate is firstly treated in the form of a liquid until a solid phase is obtained, said solid phase being progressively heated to a temperature of at most 600° C until a solid phase of $UO_3$ is formed, characterized in that, in a first stage, said nitrate is treated at a temperature in the range from 160° C to 260° C until a solid phase containing at least 55% by weight of uranium is obtained and in a second stage, said solid is progressively heated to a temperature of at most 600° C at a heating rate of at most 1000° C per hour and is kept at the temperature of at most 600° C until a second solid phase of $UO_3$ is formed having a large specific surface.

2. A process for the production of uranium trioxide having a large specific surface as claimed in claim 1, characterized in that the first stage of the denitration process is carried out under a pressure at most equal to atmospheric pressure.

3. A process for the production of uranium trioxide having a large specific surface as claimed in claims 1 and 2, characterized in that the first stage of the denitration process is carried out under a reduced pressure in the range from 5 to 200 millibars.

4. A process for the production of uranium trioxide having a large specific surface as claimed in any of claims 1 and 2, characterized in that the temperature at which the first stage takes place is in the range from 220° C to 260° C when it is carried out at atmospheric pressure.

5. A process for the production of uranium trioxide having a large specific surface as claimed in any of claims 1 to 3, characterized in that the temperature at which the first stage takes place is in the range from 180° C to 240° C when it is carried out under reduced pressure.

6. A process for the production of uranium trioxide having a large specific surface as claimed in any of claims 1 to 5, characterized in that the heating rate in the second stage is in the range from 100° C per hour to 500° C per hour.

7. A process for the production of uranium trioxide having a large specific surface as claimed in any of claims 1 to 6, characterized in that the highest temperature at which the second stage is carried out is in the range from 300° C to 500° C.

8. A process for the production of uranium trioxide having a large specific surface as claimed in any of claims 1 to 7, characterized in that the highest temperature at which the second stage is carried out is kept at that level for at most 6 hours.